# EUROPEAN PATENT SPECIFICATION

(11) **EP 0 647 544 B1**
(45) Date of publication and mention of the grant of the patent: **19.08.1998**
(21) Application number: 94202834.1
(22) Date of filing: 30.09.1994
(51) Int. Cl.: B60P 3/34

(54) **Cover construction for use on a box having rigid walls, in particular suitable for use in a folding caravan**
Abdeckung für einen Kasten mit steifen, senkrechten Wänden, insbesondere für einen faltbaren Wohnwagen
Couverture pour emploi sur une boîte avec des parois rigides, en particulier adaptée pour usage avec une caravane pliante

(30) Priority: 30.09.1993 NL 9301686
(43) Date of publication of application: 12.04.1995
(73) Proprietor: Holtkamp, Egbert Berend, NL-9561 JK Ter Apel (NL)
(72) Inventor: Holtkamp, Egbert Berend, NL-9561 JK Ter Apel (NL)
(74) Representative: Smulders, Theodorus A.H.J., Ir.

(56) References cited:
- EP-A- 0 028 195
- EP-A- 0 089 133
- GB-A- 457 169
- GB-A- 926 222
- US-A- 1 917 824
- US-A- 3 200 545

## Description

The invention relates to a cover construction for use on a box having rigid sidewalls, in particular suitable for use in a folding caravan, as known e.g. from GB-A-457 169 or GB-A-926 222.

A folding caravan, often referred to as folding trailer, comprises a chassis having wheels, carrying, in the folded-up condition of the folding caravan, a box provided with a cover. Normally, the box has rigid walls and the cover is supported by the top edge of the walls.

It is observed that within the scope of the present application, by rigid walls are also meant walls consisting of a rigid frame covered with cloth or the like, i.e. walls having a form-retaining contour form or at least a rigid top edge. Such walls are for instance described in Dutch patent application 9101928 to applicant.

Folding trailers having a cover of rigid, hard material are known. A great advantage of using such a hard cover is that it can be used for mounting a luggage carrier (roofrack). This possibility is often used for mounting bicycle carriers.

However, a drawback of the use of a hard cover is that it is very difficult to construct a hard cover so that it provides a watertight sealing on the sidewalls under all circumstances which may occur during travel and also during garaging. During a shower of rain whilst touring, water will not only hit the folding trailer from above, but spurting water will also hit the folding trailer in an inclined upward direction. Further, practically horizontal trails of water will be formed due to (travel) wind. In addition, the sealing can be influenced by suction forces generated by (travel) wind, as a result of which the waterproofness may be lost. It is of major importance that the cover forms a waterproof sealing on the box, because even a small amount of moisture in the folding trailer box will be sufficient for causing damage to the cloth of the folding caravan in the long run. The material of the cover should further be resistant to all weather influences: it must not discolor, go brittle, take up moisture, buckle, etc.

Hence, very high requirements are made of a hard cover, with regard to both the quality of the material used and the waterproofness of the sealing on the box. As a result, the construction with a hard cover is relatively costly.

The problems involved in the use of a hard cover can be avoided by covering the top side of the box of a folding trailer with a tarpaulin. A tarpaulin can be pulled over the sidewalls of the box for a considerable distance and secured by means of, for instance, elastic cord, tension bands, rubber rings, straps, etc. in such a manner that no leakage can occur.

A great advantage of the use of a tarpaulin is the relatively low price thereof. Moreover, a tarpaulin permits without any problems the box to be overloaded or inaccurately loaded. When a tarpaulin is used, a load which possibly slightly projects above the edges of the box is no problem.

However, a drawback of the use of a tarpaulin is that it cannot serve as a supporting surface for luggage to be carried along on top of the folding trailer. If one has a folding trailer that is covered with a non-hard cover, such as a tarpaulin, it is not possible to mount for instance a bicycle carrier on the cover. If bicycles are to be carried along all the same, an auxiliary frame is usually mounted on the chassis of the trailer, comprising a number of brackets or the like which bridge the trailer entirely and on which the bicycle carriers or the like can then be mounted. However, such an auxiliary frame should be disassembled and removed completely if the folding trailer is to be opened. Moreover, such brackets, loaded at a relatively great distance above their fastening points, are highly susceptible to material fatigue. Due to for instance the (travel) wind or unevennesses in the road surface, the brackets can be exposed to reciprocating movements which may after some time lead to metal fatigue and breakage.

The object of the invention is to overcome the drawbacks outlined and to provide a cover construction which combines the advantages of a hard cover with the advantages of a non-hard cover, such as a tarpaulin, but avoids the disadvantages of the known constructions.

To this end, according to the invention, a cover construction of the above-described type is characterized in that the cover construction comprises a rigid panel, and flexible edge strips extending along the circumferential edges of said panel, which edge strips in the operating condition depend on the outside along the walls of the box and are provided along the free edges thereof with fastening means for detachable fastening to the outside of the box.

Hereinafter, the invention will be explained in more detail with reference to the accompanying drawings. In these drawings:
Fig. 1 schematically shows, in rear view with the rear wall left away, an example of a known folding trailer having a rigid cover;
Fig. 2 schematically shows, in a similar view as shown in Fig. 1, an example of a known folding trailer having a flexible covering; and
Fig. 3 schematically shows a similar view as shown in Figs 1 and 2 of an example of a folding trailer having a cover construction according to the invention.

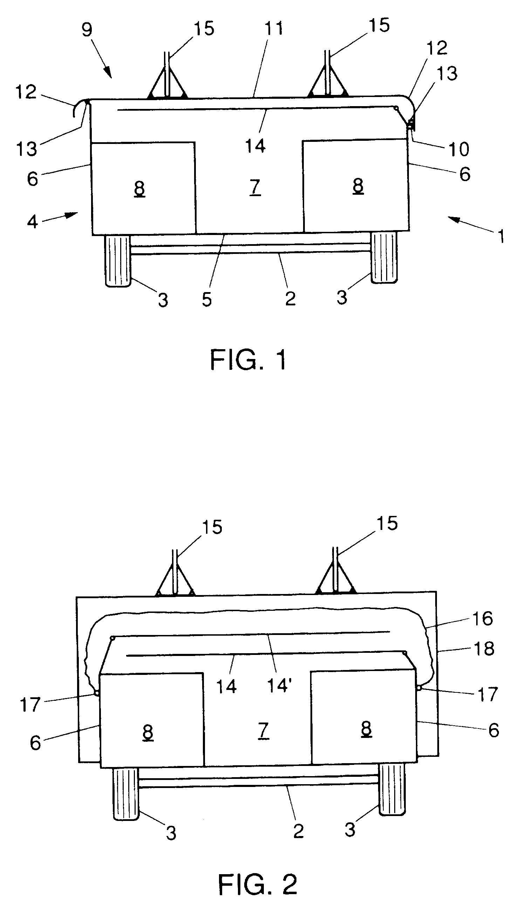

Fig. 1 schematically shows, in rear view with the rear panel left away, an example of an existing folding caravan or folding trailer 1 in the transport position. The folding trailer has a chassis 2 with wheels 3. Mounted on the chassis is a box 4 having a bottom 5, sidewalls 6 and a front and rear wall 7. The box may or may not be part of the chassis. In this example, the walls of the box are rigid panels. The walls can be made of a panel of hard material, for instance plywood, which may in turn have been provided with a polyester layer. However, the walls may also consist of a rigid frame, for instance a tubular frame, with cloth or the like stretched over it and at least comprising a tube forming the top edge. Such panels for a (folding) caravan are described in Dutch patent application 9101928 to applicant. In the transport position, the box contains the tent cloth of the folding trailer in folded condition, and other usual elements of a folding caravan, such as beds, benches, etc. In the schematic example shown, benches are designated 8. For clarity's sake, the tent cloth is not shown.

At the top side, the box 4 is closed by a rigid cover 9. In this example, the cover 9 is hingedly connected along an edge to the top part of a sidewall, as indicated at 10. The cover comprises a rigid panel 11 and rigid edge strips 12 depending on all sides, which, in the closed position of the cover, overlap the top edges of the walls of the box. Normally, sealing material is located between the cover and the top edges of the walls of the box, for instance in the form of rubber strips, to prevent moisture, working itself upwards between the depending edge strips 12 of the cover and the walls of the box, from ending up in the box. At 13, a sealing strip is schematically indicated.

Further, a conventional inner cover 14 is shown, in unfolded condition capable of serving as a (bed) platform.

Finally, in the example shown, two bicycle carriers 15 are mounted on the cover. Instead of bicycle carriers, a luggage rack or the like may be arranged. The bicycle carriers or the luggage rack or the like are or is mounted directly on the cover panel. This is possible because a rigid cover construction is used, providing sufficient strength.

It is very important that the cover connects to the top edges of the box 4 in a moisture-proof manner. If, for instance during the return journey from a vacation or during a long rest period, moisture ended up in the box in one way or another, this could cause damage to the tent cloth contained in the box. The consequence may be that at the outset of the next vacation, it turns out that a hole has been formed in the tent cloth due to rotting or fungoid growth. Hence, very high requirements are made of the material of the cover and of the sealing between cover and box with regard to rigidity, weather-resistance, expansion at a rise of temperature, etc. For this reason, fixed covers are relatively expensive. Also, the loading of a folding trailer having a fixed cover should take place very carefully to prevent the cover from bearing improperly on the walls of the box due to an inaccurate loading.

Further, the walls should be relatively high to accommodate the tent cloth and the poles of the folding caravan.

Fig. 2 shows an alternative folding trailer, known as well, comprising a tarpaulin 16 instead of a fixed cover. A tarpaulin is cheap and less sensitive to a careless loading. Also, a tarpaulin can be arranged so as to be moisture-proof in a simple manner. A tarpaulin can be pulled over the walls of the box for a considerable distance and effectively secured by means of, for instance, an elastic cord provided in a known manner along the edge of the tarpaulin, hooked behind projections, for instance knobs 17, on the walls. In the example shown in Fig. 2, two inner covers 14,14' are used, fixedly mounted on opposite sides and in unfolded condition serving as platforms.

Provided over the two inner covers and the top part of the walls is the tarpaulin 16. Now, the walls need not reach to above the inner covers, as in the case where a rigid cover is used.

A drawback of using a tarpaulin, however, is that no roofrack or the like can be mounted thereon. This would require an auxiliary construction with brackets extending upward from the chassis or bottom portion of the box and over the tarpaulin. By way of example, Fig. 2 shows an approximately U-shaped bracket construction 18 on which bicycle carriers 15 are mounted. Such bracket constructions are susceptible to material fatigue. Wind-forces and unevennesses in the road surface may give rise to reciprocating movements or even regular vibrations of the brackets, which may result in breakage of material.

Moreover, it is necessary to disassemble and remove the bracket construction entirely every time one wishes to open the folding trailer.

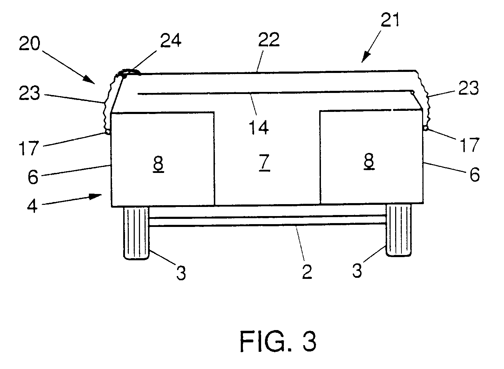

Fig. 3 schematically shows an example of a folding trailer 20 according to the invention in a similar view as in Figs 1 and 2. The folding trailer shown has a cover construction 21, consisting of a rigid panel 22, which, however, is provided on all sides with flexible, depending edge strips 23 of a suitable material. The rigid panel 22 may for instance be manufactured from plywood, polyester or another suitable material and may serve, like the example shown in Fig. 1, as a base for the transport of luggage, for instance bicycles, on top of the folding trailer. A highly suitable material for the rigid cover panel is the commercially available sandwich board, consisting of an aluminum or polyester top layer, a layer of three-ply, a layer of foam material and an underlayer of three-ply. In unfolded condition, the underlayer forms the top surface and can be finished in a suitable manner, for instance with floor covering or floor lacquer or the like. The flexible, depending edges 23 are suspended along the outside of the box and can be detachably secured along their free edges in a similar manner as the tarpaulin shown in Fig. 2 and may for instance be manufactured from sail canvas or the like. In this connection, by sail canvas is also meant the modern equivalents or successors thereof, such as plastified polyester fabric and other strong, waterproof cloth materials. The flexible edges 23 can again be pulled over the walls of the box 4 for a considerable distance and provide a considerable degree of flexibilty in respect of the loading, in addition to the desired, reliable sealing against penetrating moisture. In this example, the rigid panel is hingedly attached along one of the edges to a wall 6 of the box, as shown at 24. The hinge 24 is bridged by the adjacent flexible edge strip 23. The cover panel may also be a loose panel, not hingedly connected to the walls. The upright walls of the box 4 may, as in the case where a tarpaulin is used as shown in Fig. 2, remain low and the cover need not be provided with fixed, rigid, depending edge strips.

When walls are used consisting of rigid frame parts over which a suitable cloth material is stretched, the edge strips can be secured by means of, for instance, straps with clasps or Velcro or the like. Such straps can simply be fixed on the edge strips and the cloth of the walls.

It is observed that after the foregoing various modifications readily occur to a skilled person. For instance, the flexible edge strips 23 can be loose flaps, attached to the rigid panel by means of, for instance, welding, glueing, clamping strips, etc. so as to be waterproof. However, it is also possible to attach a continuous piece of sail canvas or the like on or under a rigid panel, having overhanging edges. A suitable clamping strip construction may consist of a tubular frame mounted under the cover panel and following the circumference of the panel, the cloth or the like being fixedly clamped between the panel and the tubular frame. The panel may be located on the inside or on the outside of the sail canvas, while a laminated construction, with the sail canvas or the like located between two rigid plates, is also conceivable.

Further, a cover construction according to the invention can also be used for (trailer) cars other than folding trailers and even for suitcases, cases and the like. The rigid cover panel will usually have dimensions that substantially correspond to the outside dimensions of the box to be closed, but this is not a necessity. A considerably smaller rigid panel or, by constrast, a larger rigid panel with adapted dimensions of the flexible flaps is conceivable.

## Claims

1. A cover construction for use on a box (4) having rigid walls (6, 7), in particular suitable for use in a folding caravan, **characterized in that** the cover construction (21) comprises a rigid panel (22), and flexible edge strips (23) extending along the circumferential edges of said panel (22) which edge strips (23), in the operating condition, depend on the outside along the walls (6, 7) of the box (4) and are provided along the free edges thereof with fastening means for detachable fastening to the outside of the box (4).

2. A cover construction according to claim 1, **characterized in that** the flexible edge strips (23) are manufactured from waterproof cloth material.

3. A cover construction according to claim 1 or 2, **characterized in that** the flexible edge strips (23) are provided along the free edges thereof with an elastic cord adapted to be hooked behind projections (17) mounted on the box (4).

4. A cover construction according to any one of the preceding claims, **characterized in that** the rigid panel (22) at an edge thereof, is hingedly connected to an edge of the box (4), and that the flexible edge strip extending along said edge bridges the hinged connection (24).

5. A cover construction according to any one of the preceding claims, **characterized in that** the flexible edge strips (23) are of a single piece of material, continuing over, under or in the entire panel (22).

6. A cover construction according to claim 5, **characterized in that** the rigid panel (22) with the flexible material forms a laminated construction.

7. A cover construction according to any one of the preceding claims, **characterized in that** the rigid panel (22) is provided with an apparatus for carrying luggage.

8. A folding caravan (20) provided with a cover construction (21) according to any one of the preceding claims.

## Patentansprüche

1. Abdeckkonstruktion zur Verwendung an einem Kasten (4) mit steifen Wänden (6, 7), die insbesondere zur Verwendung bei einem Falt-Wohnwagen geeignet ist, **dadurch gekennzeichnet,** daß die Abdeckkonstruktion (21) eine steife Platte (22) und flexible Kantenstreifen (23) aufweist, die sich entlang der Umfangskanten der Platte (22) erstrecken, wobei die Kantenstreifen (23) in dem Betriebszustand an der Außenseite entlang der Wände (6, 7) des Kastens (4) herunterhängen und entlang ihrer freien Kanten mit Befestigungseinrichtungen versehen sind, um an der Außenseite des Kastens (4) abnehmbar befestigt zu werden.

2. Abdeckkonstruktion nach Anspruch 1, **dadurch gekennzeichnet,** daß die flexiblen Kantenstreifen (23) aus einem wasserdichten Gewebematerial hergestellt sind.

3. Abdeckkonstruktion nach Anspruch 1 oder 2, **dadurch gekennzeichnet,** daß die flexiblen Kantenstreifen (23) entlang ihrer freien Kanten mit einer elastischen Schnur versehen sind, die dazu ausgestaltet ist, um hinter Vorsprüngen (17) eingehakt zu werden, die an dem Kasten (4) angebracht sind.

4. Abdeckkonstruktion nach einem der vorhergehenden Ansprüche, **dadurch gekennzeichnet,** daß die steife Platte (22) an einer Kante davon gelenkig mit einer Kante des Kastens (4) verbunden ist und daß der flexible Kantenstreifen, der sich entlang der Kante erstreckt, die Gelenkverbindung (24) überdeckt.

5. Abdeckkonstruktion nach einem der vorhergehenden Ansprüche, **dadurch gekennzeichnet,** daß die flexiblen Kantenstreifen (23) aus einem einzigen Materialstück bestehen, das über, unter oder in der gesamten Platte (22) fortgesetzt ist.

6. Abdeckkonstruktion nach Anspruch 5, **dadurch gekennzeichnet,** daß die steife Platte (22) mit dem flexiblen Material einen Schicht-Aufbau bilden.

7. Abdeckkonstruktion nach einem der vorhergehenden Ansprüche, **dadurch gekennzeichnet,** daß die steife Platte (22) mit einer Einrichtung zum Halten von Gepäck versehen ist.

8. Falt-Wohnwagen (20), der mit einer Abdeckkonstruktion (21) nach einem der vorhergehenden Ansprüche versehen ist.

## Revendications

1. Construction de couverture destinée à être utilisée sur une boite (4) possédant des parois rigides (6, 7), convenant en particulier à une caravane pliante, caractérisée en ce que la construction de couverture (21) comporte un panneau rigide (22) et des bandes flexibles de bordure (23) disposées le long des bords circonférentiels du panneau (22), les bandes de bordure (23), à l'état de fonctionnement, dépassant à l'extérieur le long des parois (6, 7) de la boite (4) et ayant, le long de leurs bords libres, des dispositifs de fixation temporaire à l'extérieur de la boite.

2. Construction de couverture selon la revendication 1, caractérisée en ce que les bandes flexibles (23) de bordure sont formées d'un matériau d'étoffe imperméable.

3. Construction de couverture selon la revendication 1 ou 2, caractérisée en ce que les bandes flexibles de bord (23) sont munies, le long de leurs bords libres, d'un cordon élastique destiné à être accroché derrière des saillies (17) montées sur la boite (4).

4. Construction de couverture selon l'une quelconque des revendications précédentes, caractérisée en ce que le panneau rigide (22), à un bord, est raccordé de manière articulée à un bord de la boite (4), et la bande flexible de bordure qui s'étend le long du bord forme un pont sur le raccord articulé (24).

5. Construction de couverture selon l'une quelconque des revendications précédentes, caractérisée en ce que les bandes flexibles (23) de bordure sont formées en une seule pièce qui se prolonge sur la totalité du panneau (22), sous celui-ci et dans celui-ci.

6. Construction de couverture selon la revendication 5, caractérisée en ce que le panneau rigide (22) forme une construction stratifiée avec la matière flexible.

7. Construction de couverture selon l'une quelconque des revendications précédentes, caractérisée en ce que le panneau rigide (23) comporte un appareil de support de bagages.

8. Caravane pliante (20) ayant une construction de couverture (21) selon l'une quelconque des revendications précédentes.
